**Europäisches Patentamt**

**European Patent Office**

**Office européen des brevets**

(19)

(11) Veröffentlichungsnummer: **0 486 946 A2**

## (12) EUROPÄISCHE PATENTANMELDUNG

(21) Anmeldenummer: **91119456.1**

(22) Anmeldetag: **14.11.91**

(51) Int. Cl.[5]: **C08G 77/60**, C04B 35/00, C04B 35/56

(30) Priorität: **20.11.90 DE 4036988**

(43) Veröffentlichungstag der Anmeldung:
**27.05.92 Patentblatt 92/22**

(84) Benannte Vertragsstaaten:
**BE DE FR GB IT NL**

(71) Anmelder: **WACKER-CHEMIE GMBH**
**Prinzregentenstrasse 22**
**W-8000 München 22(DE)**

(72) Erfinder: **Kalchauer, Wilfried, Dr.**
**Carl-Bosch-Strasse 1**
**W-8263 Burghausen(DE)**

(54) **Verfahren zur Herstellung von Metallopolysilanen und deren Verwendung.**

(57) Verfahren zur Herstellung von Metallopolysilanen, dadurch gekennzeichnet, daß mindestens ein Disilan der allgemeinen Formel

$$R_{6-n}Si_2(OR^1)_n \quad (I)$$

worin R gleich oder verschieden sein kann und Wasserstoffatom oder einwertige Kohlenwasserstoffreste, $R^1$ gleiche oder verschiedene einwertige Alkylgruppen bedeutet und n 2, 3, 4, 5 oder 6 ist,
gegebenenfalls im Gemisch mit mindestens einer Verbindung der allgemeinen Formel

$$R^2_{4-m}Si(OR^4)_m \quad (II)$$

worin $R^2$ gleich oder verschieden sein kann und eine für R angegebene Bedeutung hat, $R^4$ gleich oder verschieden sein kann und eine der für $R^1$ angegebenen Bedeutung hat und m gleich 1, 2, 3 oder 4 ist,
mit mindestens einer Verbindung der allgemeinen Formel

$$(R^5O)[A(OR^5)_{a-2}O]_xR^5 \quad (III)$$

wobei $R^5$ gleich oder verschieden sein kann und eine für $R^1$ angegebene Bedeutung hat, A ein Metall aus den Gruppen IIa, IIIa, IVa, Va, IIIb, IVb und Vb des Periodensystems bedeutet, x eine ganze Zahl von 1 bis 1000 ist und a die Wertigkeit von A bedeutet, in Anwesenheit von mindestens einer Verbindung der allgemeinen Formel

$$MOR^3 \quad (IV)$$

worin $R^3$ eine der Bedeutungen von $R^1$ hat und M Alkalimetallatom bedeutet,
umgesetzt wird.

EP 0 486 946 A2

Die Erfindung betrifft ein Verfahren zur Herstellung von Metallopolysilanen und deren Verwendung.

Verfahren zur Herstellung von Metallopolysilanen sind bereits bekannt. In US-PS 4,762,895 (Dow Corning Corp., ausgegeben am 9. August 1988) wird ein Verfahren beschrieben, bei dem ausgehend von einem Halogendisilan und einer Metallverbindung in Gegenwart eines Katalysators ein halogenhaltiges Metallopolysilan erhalten wird. Dieses halogenhaltige Metallopolysilan kann dann durch geeignete Umsetzungen, wie beispielsweise mit Grignard-Verbindung, modifiziert werden, wobei das so erhaltene Metallopolysilan jedoch meist einen gewissen Halogengehalt aufweist, was sich beim Einsatz in Verfahren zur Herstellung von Keramik im allgemeinen störend auswirkt.

Aufgabe der Erfindung war es, ein einfaches Verfahren zur Herstellung von Metallopolysilanen bereitzustellen. Diese Aufgabe wird durch die Erfindung gelöst.

Gegenstand der Erfindung ist ein Verfahren zur Herstellung von Metallopolysilanen, dadurch gekennzeichnet, daß mindestens ein Disilan der allgemeinen Formel

$$R_{6-n}Si_2(OR^1)_n \qquad (I)$$

worin R gleich oder verschieden sein kann und Wasserstoffatom oder einwertige Kohlenwasserstoffreste, $R^1$ gleiche oder verschiedene einwertige Alkylgruppen bedeutet und n 2, 3, 4, 5 oder 6 ist,
gegebenenfalls im Gemisch mit mindestens einer Verbindung der allgemeinen Formel

$$R^2_{4-m}Si(OR^4)m \qquad (II)$$

worin $R^2$ gleich oder verschieden sein kann und eine für R angegebene Bedeutung hat, $R^4$ gleich oder verschieden sein kann und eine der für $R^1$ angegebenen Bedeutung hat und m gleich 1, 2, 3 oder 4 ist,
mit mindestens einer Verbindung der allgemeinen Formel

$$(R^5O)[A(OR^5)_{a-2}O]_xR^5 \qquad (III)$$

wobei $R^5$ gleich oder verschieden sein kann und eine für $R^1$ angegebene Bedeutung hat, A ein Metall aus den Gruppen IIa, IIIa, IVa, Va, IIIb, IVb und Vb des Periodensystems bedeutet, x eine ganze Zahl von 1 bis 1000 ist und a die Wertigkeit von A bedeutet, in Anwesenheit von mindestens einer Verbindung der allgemeinen Formel

$$MOR^3 \qquad (IV)$$

worin $R^3$ eine der Bedeutungen von $R^1$ hat und M Alkalimetallatom bedeutet,
umgesetzt wird.

Bei dem Rest R handelt es sich vorzugsweise um Wasserstoffatom und Kohlenwasserstoffreste mit 1 bis 12 Kohlenstoffatomen.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest.

Bei dem Rest R handelt es sich besonders bevorzugt um den Methyl-, Ethyl-, Phenyl-, Vinyl- und Allylrest, insbesondere um den Methyl- und den Phenylrest.

Beispiele für Reste $R^1$ sind die für R als Alkylreste genannten Beispiele.

Bei dem Rest $R^1$ handelt es sich vorzugsweise um Alkylgruppen mit 1 bis 4 Kohlenstoffatomen, besonders bevorzugt um den Methyl- und Ethylrest, insbesondere um den Methylrest.

Die Bedeutung von n ist bevorzugt 2, 3 und 4, besonders bevorzugt 3 und 4.

Beispiele für die im erfindungsgemäßen Verfahren eingesetzten Disilane gemäß Formel (I) sind 1,2-Phenyl-1,2-dimethyldimethoxydisilan, 1,1,2-Trimethyltrimethoxydisilan, 1,1,2-Trimethyltriethoxydisilan, 1-Phenyl-1,2-dimethyltrimethoxydisilan, 1-Phenyl-1,2-dimethyltriethoxydisilan, 1-Vinyl-1,2-dimethyltrimethoxydisilan, 1-Vinyl-1,2-dimethyltriethoxydisilan, 1,2-Dimethyltetramethoxydisilan, 1,2-Dimethyltetraethoxydisilan, Methylpentamethoxydisilan, Methylpentaethoxydisilan, Methylpenta-iso-propoxydisilan, Hexamethoxydisilan, Hexaethoxydisilan und Hexa-iso-propoxydisilan.

Bei den im erfindungsgemäßen Verfahren eingesetzten Disilanen handelt es sich bevorzugt um 1,2-Phenyl-1,2-dimethyldimethoxydisilan, 1,1,2-Trimethyltrimethoxydisilan, 1,1,2-Trimethyltriethoxydisilan, 1-Phenyl-1,2-dimethyltrimethoxydisilan, 1-Phenyl-1,2-dimethyltriethoxydisilan, 1,2-Dimethyltetramethoxydisilan und 1,2-Dimethyltetraethoxydisilan.

Bei dem in erfindungsgemäßen Verfahren eingesetzten Disilan gemäß Formel (I) kann es sich um eine einzelne Art eines derartigen Disilans wie auch um ein Gemisch aus mindestens zwei verschiedenen Arten derartiger Disilane handeln.

Die Herstellung von Disilanen ist vielfach bekannt. Hierzu sei beispielsweise auf E. Hengge et al., Monatshefte für Chemie 105 (1974) 671-83 und 99 (1968) 340-6 sowie auf W. H. Atwell et al., J. Organomet. Chem. 7 (1967) 71-8 und H.

Watanabe et al., J. Organomet. Chem. 128 (1977) 173-5 verwiesen.

Beispiele für Rest $R^2$ sind die für R angegebenen Beispiele, wobei $R^2$ bevorzugt Methyl-, Ethyl-, n-Propyl-, iso-Propyl-, n-Butyl-, iso-Butyl-, n-Octyl-, Vinyl- und Phenylrest, besonders bevorzugt Methyl-, Vinyl- und Phenylrest, bedeutet.

Bei dem Rest $R^4$ handelt es sich vorzugsweise um Alkylgruppen mit 1 bis 4 Kohlenstoffatomen, besonders bevorzugt um den Methyl- und Ethylrest, insbesondere um den Methylrest.

Die Bedeutung von m ist vorzugsweise 2 oder 3, besonders bevorzugt 2.

Beispiele für Monosilane der Formel (II) sind Trimethylmethoxysilan, Trimethylethoxysilan, Triethylethoxysilan, Vinyldimethylethoxysilan, Tri-n-propylethoxysilan, Tri-isopropylethoxysilan, Tri-n-butylethoxysilan, Triphenylethoxysilan, Ethylmethyldimethoxysilan, Phenylmethyldimethoxysilan, Vinylmethyldimethoxysilan, Dimethyldiethoxysilan, Ethylmethyldiethoxysilan, Phenylmethyldiethoxysilan, Vinylmethyldiethoxysilan, Methyltrimethoxysilan, Ethyltrimethoxysilan, Phenyltriethoxysilan, Propyltrimethoxysilan, Vinyltrimethoxysilan, Phenyltrimethoxysilan, Methyltriethoxysilan, Propyltriethoxysilan, Vinyltriethoxysilan, Propyltriethoxysilan, n-Octyltriethoxysilan, iso-Octyltriethoxysilan, n-Octyltrimethoxysilan, iso-Octyltrimethoxysilan und Tetraethoxysilan.

Vorzugsweise werden Phenylmethyldimethoxysilan, Phenylmethyldiethoxysilan, Phenyltrimethoxysilan und Phenyltriethoxysilan eingesetzt, wobei Phenylmethyldimethoxysilan besonders bevorzugt wird.

Bei dem im erfindungsgemäßen Verfahren eingesetzten Silan der Formel (II) kann es sich um eine einzelne Art eines derartigen Silans wie auch um ein Gemisch aus mindestens zwei verschiedenen Arten derartiger Silane handeln.

Die Herstellung von Silanen gemäß Formel (II) ist bekannt. Hierzu sei beispielsweise auf W. Noll, "Chemistry and Technology of Silicones", Academic Press, London (1968), Seite 68 ff verwiesen.

Bei dem erfindungsgemäßen Verfahren wird Silan gemäß Formel (II) vorzugsweise in Mengen von 0 bis 40 Gewichtsprozent, besonders bevorzugt 10 bis 20 Gewichtsprozent, jeweils bezogen auf das Gesamtgewicht an eingesetztem Disilan, eingesetzt.

Bei dem Rest $R^5$ handelt es sich vorzugsweise um Alkylgruppen mit 1 bis 6 Kohlenstoffatomen, besonders bevorzugt um den Methyl-, Ethyl-, i-Propyl- und den n-Butylrest, insbesondere um den i-Propyl und den n-Butylrest.

Bevorzugt handelt es sich bei A in Formel (III) um Beryllium, Magnesium, Calcium, Strontium, Barium, Yttrium, Lanthan, Aluminium, Titan, Zirkonium, Hafnium, Germanium, Niob, Tantal, Arsen und Antimon, wobei A besonders bevorzugt die Bedeutung von Titan, Zirkonium und Aluminium hat.

Die Bedeutung von x ist bevorzugt eine ganze Zahl zwischen 1 und 700, besonders bevorzugt zwischen 1 und 500.

Beispiele für Verbindung der Formel (III) sind Magnesiumethylat, Calciummethylat, Calcium-i-propylat, Strontium-i-propylat, Barium-i-propylat, Yttrium(III)-i-propylat, Aluminium-n-butylat, Aluminium-n-propylat, Aluminiumethylat, Aluminium-i-propylat, Titan(IV)-n-propylat, Titan(IV)-n-butylat, Titan(IV)ethylat, Titan(IV)-methylat, Titan(IV)-i-propylat, Zirkonium(IV)-n-butylat, Zirkonium(IV)ethylat, Zirkonium(IV)-n-propylat, Hafnium(IV)-t-butylat, Hafnium(IV)ethylat, Hafnium(IV)-i-propylat, Germanium(IV)-ethylat, Lanthan(III)-i-propylat, Niob(V)ethylat, Tantal(V)ethylat, Tantal(V)methylat, Antimon(V)-n-butylat, Antimon(V)ethylat und Antimon-(V)methylat jeweils mit x = 1 sowie Polytitan(IV)-n-butylat und Polytitan(IV)-n-propylat jeweils mit x gleich 2 bis 500.

Bevorzugt werden bei dem erfindungsgemäßen Verfahren als Verbindung gemäß Formel (III) Titan(IV)-n-butylat, Polytitan(IV)-n-butylat, Titan(IV)-n-propylat, Polytitan(IV)-n-propylat, Zirkonium(IV)ethylat, Zirkonium(IV)-n-butylat, Zirkonium(IV)-n-propylat, Aluminium-i-propylat und Aluminium-n-butylat.

Besonders bevorzugt werden bei dem erfindungsgemäßen Verfahren als Verbindung gemaß Formel (III) Titan(IV)-n-butylat, Polytitan(IV)-n-butylat, Titan(IV)-n-propylat, Zirkonium(IV)-n-propylat, Aluminium-n-butylat und Zirkonium(IV)-n-butylat.

Bei der im erfindungsgemäßen Verfahren eingesetzten Verbindung gemäß Formel (III) kann es sich um

EP 0 486 946 A2

eine einzelne Art einer derartigen Verbindung wie auch um ein Gemisch aus mindestens zwei verschiedenen Arten derartiger Verbindungen handeln.

Die erfindungsgemäß eingesetzten Verbindungen gemäß Formel (III) sind handelsübliche Produkte bzw. nach in der organischen Chemie gängigen Methoden herstellbar.

Bei dem erfindungsgemäßen Verfahren wird Verbindung gemäß Formel (III) vorzugsweise in Mengen von 0,2 bis 10 Gewichtsprozent, besonders bevorzugt 1 bis 7 Gewichtsprozent, insbesondere 1 bis 5 Gewichtsprozent, jeweils bezogen auf das Gesamtgewicht an eingesetztem Disilan, eingesetzt.

Beispiele für Rest $R^3$ sind die für Rest $R^1$ genannten Beispiele.

Bei dem Rest $R^3$ handelt es sich bevorzugt um den Methyl-, Ethyl- und tert.-Butylrest, insbesondere um den Methyl- und tert.-Butylrest.

Vorzugsweise handelt es sich bei M in Formel (IV) um Lithium, Natrium, Kalium, Rubidium oder Cäsium, wobei Natrium und Kalium besonders bevorzugt sind.

Beispiele für die im erfindungsgemäßen Verfahren als Katalysator eingesetzte Verbindung der Formel (IV) sind Natriummethylat, Natriumethylat, Natrium-tert.-butylat, Kalium-tert.-butylat und Kaliummethylat.

Bei dem erfindungsgemäßen Verfahren werden als Katalysator bevorzugt Natriummethylat, Natriumethylat, Natrium-tert.-butylat und Kalium-tert.-butylat, besonders bevorzugt Natriummethylat und Kalium-tert.-butylat eingesetzt.

Bei dem erfindungsgemäßen Verfahren wird Katalysator vorzugsweise in Mengen von 0,03 bis 2,50 Gewichtsprozent, besonders bevorzugt 0,05 bis 0,80 Gewichtsprozent, jeweils bezogen auf das Gesamtgewicht an eingesetztem Disilan, eingesetzt.

Bei den im erfindungsgemäßen Verfahren eingesetzten Katalysatoren kann es sich um eine einzelne Art eines derartigen Katalysators wie auch um ein Gemisch aus mindestens zwei verschiedenen Arten derartiger Katalysatoren handeln.

Bei dem erfindungsgemäßen Verfahren erfolgt die Umsetzung unter inerter Atmosphäre, wie beispielsweise unter Stickstoff- oder Argonatmosphäre, nach Vermischen der Reaktionsteilnehmer und Katalysator bei Temperaturen vorzugsweise zwischen 20 und 280°C, besonders bevorzugt zwischen 60 und 230°C und einem Druck vorzugsweise zwischen 900 und 1100 hPa. Falls erwünscht können jedoch auch höhere oder niedrigere Drücke angewendet werden. Vorzugsweise werden bei dem erfindungsgemäßen Verfahren die flüchtigen Bestandteile, wie etwa entstehende, monomere Silane, während oder nach, besonders bevorzugt während, der Umsetzung destillativ aus dem Reaktionsgemisch entfernt.

Bei dem erfindungsgemäßen Verfahren werden Metallopolysilane mit durchschnittlich bis zu 15 Siliciumatomen und einem mittleren Molekulargewicht zwischen 500 und 1 000 erhalten, wobei die Molekulargewichtsverteilung weitgehend monomodal und symmetrisch ist. Die Erweichungstemperatur liegt bei den erfindungsgemäß hergestellten Metallopolysilanen vorzugsweise im Bereich von 20 bis 150°C.

Das erfindungsgemäße Verfahren hat den Vorteil, daß es einstufig und relativ leicht durchzuführen ist, wobei Metallopolysilane, die frei von Si-gebundenen Halogenatomen sind, erhalten werden.

Das erfindungsgemäße Verfahren hat des weiteren den Vorteil, daß durch geeignete Wahl der Reaktionsbedingungen die chemischen und physikalischen Eigenschaften des Metallopolysilans in breiten Bereichen gesteuert werden können.

Die erfindungsgemäß hergestellten Metallopolysilane können für alle Zwecke eingesetzt werden, für die auch bisher Metallopolysilane bzw. Organopolysilane und Organopolycarbosilane eingesetzt werden konnten.

Besonders bevorzugt werden die erfindungsgemäß hergestellten Metallopolysilane in Verfahren zur Herstellung von Siliciumcarbid (SiC)-Fasern verwendet.

SiC-Fasern und Verfahren zu ihrer Herstellung sind vielfach bekannt. SiC-Fasern werden vorwiegend aus Polysilanen oder Polycarbosilanen hergestellt. Allen Verfahren gemeinsam ist das Verspinnen eines geeigneten Polymeren mit anschließender Vernetzung und Pyrolyse unter Inertgas oder Vakuum.

Bei einem bevorzugten Verfahren zur Herstellung von SiC-Fasern werden erfindungsgemäß hergestellte Metallopolysilane zu Fasern versponnen und unter inerter Atmosphäre oder im Vakuum bei Temperaturen im Bereich von 800 bis 1400 °C umgesetzt.

Bevorzugte Temperaturen sind im Bereich von 1000 bis 1300 °C und bevorzugte Inertgase Argon und Stickstoff.

Das Verspinnen zu Fasern wird durch bekannte Verfahren, wie Trockenspinnen, Naßspinnen oder Schmelzspinnen, vorzugsweise jedoch durch Schmelzspinnen, durchgeführt. Hierbei werden aus der Schmelze Fasern mit einem mittleren Durchmesser von vorzugsweise 10 bis 60 μm versponnen und durch Einwirkung von Wärme, Licht, wie beispielsweise UV-Licht, Wasserdampf und/oder Sauerstoff, insbesondere jedoch Luft, vernetzt. Die vernetzten Fasern können unter Inertgas oder Luft bei Temperaturen von 50 bis 400 °C verstreckt werden.

4

Die mit den erfindungsgemäß hergestellten Metallopolysilanen erzeugten SiC-Fasern haben den Vorteil, daß sie sehr gute mechanische Eigenschaften aufweisen.

SiC-Fasern finden hauptsächlich Anwendung in Faserverbundwerkstoffen, vorzugsweise in Faserverbundwerkstoffen, deren Matrix aus Keramik, wie SiC und $Si_3N_4$, Glas oder Metallen, wie etwa Aluminium und Titan, besteht.

Die erfindungsgemäßen Metallopolysilane werden des weiteren in Verfahren zur Herstellung von Siliciumcarbid (SiC) bzw. SiC-Keramik durch Erhitzen der erfindungsgemäß hergestellten Metallopolysilane auf Temperaturen von über 600°C unter inerter Atmosphäre, wie beispielsweise unter Argon-, Helium- oder Stickstoffatmosphäre, oder im Vakuum, eingesetzt.

Bei einem bevorzugten Verfahren zur Herstellung von poröser SiC-Keramik werden erfindungsgemäß hergestellte Metallopolysilane mit SiC-Pulver vermischt, zu Formkörpern verpreßt und unter inerter Atmosphäre oder im Vakuum bei Temperaturen im Bereich von 700 bis 2200 °C umgesetzt.

Bevorzugte Temperaturen sind im Bereich von 900 bis 1500 °C und bevorzugte SiC-Pulver weisen eine mittlere Korngröße von 0,1 bis 100 $\mu$m, insbesondere 0,4 bis 50 $\mu$m, auf. Vorzugsweise werden 25 bis 95 Gewichtsprozent, insbesondere 50 bis 80 Gewichtsprozent, jeweils bezogen auf das Gewicht an eingesetztem Metallopolysilan, SiC-Pulver verwendet.

Dem aus Metallopolysilan und SiC-Pulver bestehenden Gemisch werden vorzugsweise noch Preßhilfsstoffe, insbesondere Fließhilfsmittel, in Mengen von 0,01 bis 5 Gewichtsprozent, insbesondere 0,2 bis 1 Gewichtsprozent, jeweils bezogen auf das Gewicht an eingesetztem SiC-Pulver, zugesetzt. Fließhilfsmittel sind beispielsweise in Aldinger, Kalz; Angew. Chemie 5, 381, 1987, beschrieben. Insbesondere werden Glycerin, Ammoniumstearat und Polyethylenglycole verwendet.

Beim Vermischen des erfindungsgemäßen Metallopolysilans mit dem SiC-Pulver und gegebenenfalls mit dem Preßhilfsstoff geht man vorzugsweise derart vor, daß das Metallopolysilan in einem organischen Lösungsmittel gelöst wird und mit den weiteren Komponenten vermischt wird. Bevorzugte Lösungsmittel sind aromatische oder aliphatische Kohlenwasserstoffe, wie Toluol, Xylol und Petrolether verschiedener Siedefraktionen, in Mengen von vorzugsweise 10 bis 99 Gewichtsprozent, insbesondere 35 bis 55 Gewichtsprozent, jeweils bezogen auf das Gemisch.

Anschließend wird das Lösungsmittel entfernt, vorzugsweise bei Temperaturen von 50 bis 200 °C und Drücken von 10 bis 1000 Pa. Der verbleibende Rückstand wird zerkleinert und gesiebt. Das so erhaltene Pulver mit einer maximalen Korngröße von vorzugsweise 500 $\mu$m, insbesondere 200 $\mu$m, wird mit Hilfe einer Presse gegebenenfalls unter Temperatureinwirkung zu einem Formkörper verpreßt. Dies kann unter Inertgas, Luft oder Vakuum erfolgen.

Die erfindungsgemäßen porösen Siliciumkeramiken werden insbesondere in der Filtertechnik eingesetzt. Durch die Korngrößen und die Korngrößenverteilung der eingesetzten SiC-Pulver und auch durch die Verhältnisse SiC-Pulver zu Metallopolysilan lassen sich die Porengrößen und Porengrößenverteilung in den Keramiken einstellen. Einer der Vorteile von SiC-Filterplatten ist, daß organische Filterrückstände durch Oxidation leicht entfernt werden können, ohne daß dabei die Keramikfilter zerstört werden.

Des weiteren können die erfindungsgemäß hergestellten Metallopolysilane in Verfahren zur Herstellung von Schutzüberzügen auf Basis von Siliciumcarbid eingesetzt werden. Diese Beschichtungen auf metallischen und nichtmetallischen Oberflächen sind thermisch und chemisch beständig.

Bei einem bevorzugten Verfahren zur Herstellung von Schutzüberzügen auf Basis von Siliciumcarbid werden erfindungsgemäß hergestellte Metallopolysilane, vorzugsweise im Gemisch mit SiC-Pulver und organischem Lösungsmittel, auf das zu schützende Substrat aufgebracht und in inerter Atmosphäre, wie beispielsweise unter Argon- oder Stickstoffatmosphäre oder im Vakuum, bei Temperatur im Bereich von 700 bis 1500 °C beziehungsweise unter reaktiver Atmosphäre, wie beispielsweise in sauerstoffhaltigen Gasgemischen, bei Temperaturen von 200 bis 700 °C umgesetzt.

Besonders bevorzugt werden dabei Gemische aus 10 bis 80 Gewichtsprozent, vorzugsweise 15 bis 40 Gewichtsprozent, erfindungsgemäß hergestelltem Metallopolysilan, 10 bis 80 Gewichtsprozent, bevorzugt 20 bis 50 Gewichtsprozent, SiC-Pulver mit einer mittleren Korngrößenverteilung von 0,1 bis 20 $\mu$m, vorzugsweise 0,3 bis 5 $\mu$m, und 10 bis 80 Gewichtsprozent, vorzugsweise 15 bis 60 Gewichtsprozent, organischem Lösungsmittel, wie aliphatische und aromatische Kohlenwasserstoffe, bevorzugt Toluol, Xylol und Petrolether verschiedener Siedefraktionen, eingesetzt.

Die Auftragung der Beschichtung kann in beliebiger für das Auftragen von flüssigen oder pastösen Stoffen auf Substrate geeigneter Weise, zum Beispiel durch Tauchen, Sprühen, Streichen, Gießen oder Walzen, erfolgen.

Nach dem Auftragen wird die Beschichtung vorzugsweise 15 Minuten bis 2 Stunden bei Temperaturen von vorzugsweise 10 bis 200 °C in inerter oder reaktiver Atmosphäre getrocknet.

Vorzugsweise weisen die erfindungsgemäß hergestellten Schutzüberzüge eine Dicke von 2 - 2000 $\mu$m,

insbesondere 2 - 50 μm, auf. Sie finden insbesondere Verwendung zur Erzeugung thermisch und chemisch beständiger Oberflächenbeschichtungen auf Metallen, Keramik, Glaskeramik, Faserwerkstoffen und Kohlenstoff.

In den nachstehend beschriebenen Beispielen beziehen sich alle Angaben von Teilen und Prozentsätzen, falls nicht anders angegeben, auf das Gewicht. Sofern nicht anders angegeben, werden die in den Beispiele 1 bis 5 beschriebenen Umsetzungenunter Argonatmosphäre bei einem Druck von etwa 1020 hPa und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt. Sofern nicht anders angegeben werden die Beispiele 6 bis 8 unter Umgebungsbedingungen, also bei einem Druck von etwa 1000 hPa und Raumtemperatur durchgeführt.

Die Bestimmung des Gewichtsmittels $M_w$ und des Zahlenmittels $M_n$ erfolgt aus den entsprechenden GPC-Chromatogrammen mit Polystyrolstandards.

**Beispiel 1**

Ein Gemisch aus 725 g 1,1,2-Trimethyltrimethoxydisilan, 275 g 1,2-Dimethyltetramethoxydisilan und 25 g Poly-n-butyltitanat(IV) ($M_n$ = 950, $M_w$ = 1060, monomodale Verteilung; käuflich erhältlich bei Johnson Matthey GmbH, Alfa Products) wird auf 60 °C erwärmt. Anschließend werden 4 g Natriummethylat zugegeben, wobei sich das Gemisch ohne äußere Wärmezufuhr auf 67°C erwärmt. Anschließend wird das Gemisch auf 205°C erwärmt, wobei 755 g eines Gemisches aus Methytrimethoxysilan und Dimethyldimethoxysilan abdestillieren. Es werden 260 g blaugrauer Rückstand erhalten, die zur Abtrennung der unerwünschten Oligomeren in 300 g Petrolether mit einem Siedebereich von 170 bis 200 °C gelöst werden. Anschließend werden Lösungsmittel und Oligomere bei 250 °C und 10 Pa abdestilliert. Der so erhaltene Rückstand von 200 g ist ein blauschwarzes Metallopolysilan, welches bei etwa 30 °C erweicht, mit einem numerischen Mittel $M_n$ von 600 und einem Gewichtsmittel $M_w$ von 1000. Das molare Verhältnis von Methylgruppen zu Methoxygruppen zu Butoxygruppen beträgt laut $^1$H-NMR-Spektrum 100:7,5:1,0. Das so erhaltene Metallopolysilan wird in einem Ofen mit einer Aufheizrate von 10 °C/Minute pyrolisiert, wobei die Endtemperatur 1250 °C beträgt. Der dabei erhaltene schwarze Rückstand weist die in Tabelle 1 angegebene Elementarzusammensetzung auf.

**Beispiel 2**

Ein Gemisch aus 580 g 1,1,2-Trimethyltrimethoxydisilan, 420 g 1,2-Dimethyltetramethoxydisilan, 25 g Poly-n-butyltitanat(IV) ($M_n$ = 950, $M_w$ = 1060, monomodale Verteilung; käuflich erhältlich bei Johnson Matthey GmbH, Alfa Products) und 100 g Dimethoxymethylphenylsilan wird auf 40 °C erwärmt. Anschließend werden 2,8 g Natriummethylat zugegeben, wobei sich das Gemisch ohne äußere Wärmezufuhr auf 46°C erwärmt. Anschließend wird das Gemisch auf 210°C erwärmt, wobei 818 g eines Gemisches aus Methyltrimethoxysilan und Dimethyldimethoxysilan abdestillieren. Es werden 270 g blaugrauer Rückstand erhalten, die zur Abtrennung der unerwünschten Oligomeren in 300 g Petrolether mit einem Siedebereich von 170 bis 200 °C gelöst werden. Anschließend werden Lösungsmittel und Oligomere bei 250 °C und 10 Pa abdestilliert. Der so erhaltene Rückstand von 215 g ist ein blauschwarzes Metallopolysilan, welches bei etwa 35 °C erweicht, mit einem numerischen Mittel $M_n$ von 700 und einem Gewichtsmittel $M_w$ von 1500. Das molare Verhältnis von Methylgruppen zu Methoxygruppen zu Phenylgruppen zu Butoxygruppen beträgt laut $^1$H-NMR-Spektrum 100:15,7:4,1:1,6. Mit dem so erhaltenen Metallopolysilan wird wie in Beispiel 1 beschrieben verfahren. Angaben über die Elementarzusammensetzung finden sich in Tabelle 1.

**Beispiel 3**

Ein Gemisch aus 1000 g 1,2-Dimethyltetramethoxydisilan, 100 g Dimethoxymethylphenylsilan und 25 g Poly-n-butyltitanat(IV) ($M_n$ = 950, $M_w$ = 1060, monomodale Verteilung; käuflich erhältlich bei Johnson Matthey GmbH, Alfa Products) wird auf 80 °C erwärmt. Anschließend werden 1,5 g Natriummethylat zugegeben, wobei sich das Gemisch ohne äußere Wärmezufuhr auf 83°C erwärmt. Anschließend wird das Gemisch auf 220°C erwärmt, wobei 851 g Methyltrimethoxysilan abdestillieren. Es werden 250 g blaugrauer Rückstand erhalten, die zur Abtrennung der unerwünschten Oligomeren in 250 g Petrolether mit einem Siedebereich von 170 bis 200 °C gelöst werden. Anschließend werden Lösungsmittel und Oligomere bei 250 °C und 10 Pa abdestilliert. Der so erhaltene Rückstand von 190 g ist ein blauschwarzes Metallopolysilan, welches bei etwa 85 °C erweicht, mit einem numerischen Mittel $M_n$ von 850 und einem Gewichtsmittel $M_w$ von 1750. Das molare Verhältnis von Methylgruppen zu Methoxygruppen zu Phenylgruppen zu

6

Butoxygruppen beträgt laut $^1$H-NMR-Spektrum 100:35,9:3,3:2,1. Mit dem so erhaltenen Metallopolysilan wird wie in Beispiel 1 beschrieben verfahren. Angaben über die Elementarzusammensetzung finden sich in Tabelle 1.

**Beispiel 4**

Ein Gemisch aus 1000 g 1,2-Dimethyltetramethoxydisilan, 140 g 1,2-Dimethyl-1,1,2-trimethoxyphenyldisilan und 35 g Tetra-n-propyltitanat (käuflich erhältlich bei Merck, D-6100 Darmstadt) wird auf 70 °C erwärmt. Anschließend werden 1,8 g Natriummethylat zugegeben, wobei sich das Gemisch ohne äußere Wärmezufuhr auf 83°C erwärmt. Anschließend wird das Gemisch auf 225°C erwärmt, wobei 845 g Methyltrimethoxysilan abdestillieren. Es werden 300 g blaugrauer Rückstand erhalten, die zur Abtrennung der unerwünschten Oligomeren in 350 g Petrolether mit einem Siedebereich von 170 bis 200 °C gelöst werden. Anschließend werden Lösungsmittel und Oligomere bei 250 °C und 10 Pa abdestilliert. Der so erhaltene Rückstand von 250 g ist ein blauschwarzes Metallopolysilan, welches bei etwa 80 °C erweicht, mit einem numerischen Mittel $M_n$ von 850 und einem Gewichtsmittel $M_w$ von 1750. Das molare Verhältnis von Methylgruppen zu Methoxygruppen zu Phenylgruppen zu Propoxygruppen beträgt laut $^1$H-NMR-Spektrum 100:33,7:7,8:1,9. Mit dem so erhaltenen Metallopolysilan wird wie in Beispiel 1 beschrieben verfahren. Angaben über die Elementarzusammensetzung finden sich in Tabelle 1.

**Beispiel 5**

Ein Gemisch aus 1000 g 1,2-Dimethyltetramethoxydisilan, 85 g 1,2-Dimethoxy-1,2-dimethyl-1,2-diphenyldisilan und 40 g Zirkonium(IV)-n-propylat (käuflich erhältlich bei Strem Chemicals GmbH, D-7640 Kehl) wird auf 65 °C erwärmt.

Anschließend werden 2,4 g Natriummethylat zugegeben, wobei sich das Gemisch ohne äußere Wärmezufuhr auf 73°C erwärmt. Anschließend wird das Gemisch auf 240°C erwärmt, wobei 868 g Methyltrimethoxysilan abdestillieren. Es werden 230 g blaugrauer Rückstand erhalten, die zur Abtrennung der unerwünschten Oligomeren in 200 g Petrolether mit einem Siedebereich von 170 bis 200 °C gelöst werden. Anschließend werden Lösungsmittel und Oligomere bei 250 °C und 10 Pa abdestilliert. Der so erhaltene Rückstand von 185 g ist ein Metallopolysilan, welches bei etwa 115 °C erweicht, mit einem numerischen Mittel $M_n$ von 800 und einem Gewichtsmittel $M_w$ von 1800. Das molare Verhältnis von Methylgruppen zu Methoxygruppen zu Phenylgruppen zu Propoxygruppen beträgt laut $^1$H-NMR-Spektrum 100:34,3:10,3:2,0. Mit dem so erhaltenen Metallopolysilan wird wie in Beispiel 1 beschrieben verfahren. Angaben über die Elementarzusammensetzung finden sich in Tabelle 1.

Tabelle 1

| Beispiel | Rückstand [%][1) ] | Si [%] | C [%] | H [%] | Ti [%] | Zr [%] |
|----------|---------------------|--------|-------|--------|---------|--------|
| 1 | 38-45 | 60-64 | 26-30 | 0,0-0,5 | 2,1-2,8 | 0 |
| 2 | 40-47 | 58-63 | 29-33 | 0,0-0,5 | 2,1-2,8 | 0 |
| 3 | 45-58 | 58-63 | 28-34 | 0,0-0,5 | 2,1-2,8 | 0 |
| 4 | 45-58 | 58-63 | 28-34 | 0,0-0,5 | 1,0-1,5 | 0 |
| 5 | 45-58 | 55-60 | 29-36 | 0,0-0,5 | 0 | 1,0-1,5 |

1) bezogen auf das Gewicht an eingesetztem Metallopolysilan

**Beispiel 6** Die in den Beispielen 3, 4 und 5 hergestellten Metallopolysilane werden jeweils in einer Kolben-Schmelzspinnvorrichtung auf eine Temperatur, die 50 bis 80 °C über der jeweiligen Erweichungstemperatur liegt, erwärmt und mit 4 bis 20 bar jeweils durch eine 100 μm-Lochdüse und durch eine 300 μm-Lochdüse versponnen, wobei die Abzugsgeschwindigkeit im Bereich von 35 bis 200 m/Minute variiert wird. Die Fasern zeigen je nach den gewählten Spinnbedingungen Einzelfadendurchmesser im Bereich von 15 bis 60 μm. Die Fasern werden in Anwesenheit von Luftsauerstoff 1 bis 5 Tage lang mit UV-A-Licht (380-315 nm) und anschließend 10 Sekunden lang mit UV-C-Licht (280-100 nm) bestrahlt. Die so erhaltenen Faserbündel zeigen gute Reißfestigkeit und Flexibilität. Sie werden anschließend 30 Minuten lang an Luft bis 180 °C nachvernetzen gelassen und dann unter einer Zugspannung von 0,5 bis 2,0 g kontinuierlich durch einen mit Argon gespülten 1250°C heißen Rohrofen mit einer Heizlänge von 0,25 m mit einer Geschwindigkeit von 0,5 m/Minute gezogen.

Die so erhaltenen SiC-Fasern haben eine durchschnittliche Zusammensetzung von:

| Silicium: | 46 bis 55 Gewichtsprozent |
|---|---|
| Kohlenstoff: | 22 bis 29 Gewichtsprozent |
| Sauerstoff: | 17 bis 28 Gewichtsprozent |
| Titan: | 0 bis 2,8 Gewichtsprozent |
| Zirkonium: | 0 bis 1,5 Gewichtsprozent |
| Wasserstoff: | 0 bis 0,5 Gewichtsprozent |

Die Zugfestigkeit der so erhaltenen SiC-Fasern beträgt abhängig von ihrem Durchmesser
0,5 - 0,8 GPa bei 50 $\mu$m,
0,6 - 1,3 GPa bei 30 $\mu$m and
2,4 - 3,9 GPa bei 10 $\mu$m.
Die Zugfestigkeitswerte bleiben an Luft bei Temperaturen bis circa 1100°C und unter inerter Atmosphäre bis circa 1250°C mindestens eine Stunde lang erhalten.

**Beispiel 7**

Je 160 g eines gemäß Beispiel 1 bzw. 2 hergestellten Metallopolysilans werden mit 250 g Xylol und 75 g Siliciumcarbid mit einer maximalen Teilchengröße von 20 $\mu$m vermischt und intensiv gerührt.
Teststäbchen aus CFC (Carbon Fiber Reinforced Carbon), Graphit, Eisen und Stahl werden jeweils mit dieser Zusammensetzung bestrichen und in einem Ofen mit einer Aufheizrate von 10 °C/h unter Argonspülung auf 1100°C im Falle von Teststäbchen aus CFC und Graphit bzw. 800°C im Falle von Teststäbchen aus Eisen und Stahl aufgeheizt, 1,5 Stunden bei dieser Temperatur gehalten und anschließend abkühlen gelassen.
Alle acht Teststäbchen weisen eine gleichmäßige, festhaftende Siliciumcarbidschicht auf mit einer durchschnittlichen Schichtdicke zwischen 40 und 60 $\mu$m.

**Beispiel 8**

Teststäbchen aus CFC, Graphit, Eisen und Stahl werden jeweils mit der in Beispiel 7 beschriebenen Zusammensetzung bestrichen und in einem Ofen mit einer Aufheizrate von 1°C/Minute in Anwesenheit von Luft auf 300°C aufgeheizt, 1,5 Stunden bei dieser Temperatur gehalten und anschließend abkühlen gelassen.
Alle acht Teststäbchen weisen eine gleichmäßige, festhaftende, hydrophobe, elastische Beschichtung auf mit einer durchschnittlichen Schichtdicke zwischen 40 und 60 $\mu$m.

**Patentansprüche**

1. Verfahren zur Herstellung von Metallopolysilanen, dadurch gekennzeichnet, daß mindestens ein Disilan der allgemeinen Formel

$$R_{6-n}Si_2(OR^1)_n \qquad (I)$$

worin R gleich oder verschieden sein kann und Wasserstoffatom oder einwertige Kohlenwasserstoffreste, $R^1$ gleiche oder verschiedene einwertige Alkylgruppen bedeutet und n 2, 3, 4, 5 oder 6 ist, gegebenenfalls im Gemisch mit mindestens einer Verbindung der allgemeinen Formel

$$R^2_{4-m}Si(OR^4)_m \qquad (II)$$

worin $R^2$ gleich oder verschieden sein kann und eine für R angegebene Bedeutung hat, $R^4$ gleich oder verschieden sein kann und eine der für $R^1$ angegebenen Bedeutung hat und m gleich 1, 2, 3 oder 4 ist, mit mindestens einer Verbindung der allgemeinen Formel

$$(R^5O)[A(OR^5)_{a-2}O]_xR^5 \qquad (III)$$

8

wobei $R^5$ gleich oder verschieden sein kann und eine für $R^1$ angegebene Bedeutung hat, A ein Metall aus den Gruppen IIa, IIIa, IVa, Va, IIIb, IVb und Vb des Periodensystems bedeutet, x eine ganze Zahl von 1 bis 1000 ist und a die Wertigkeit von A bedeutet, in Anwesenheit von mindestens einer Verbindung der allgemeinen Formel

$MOR^3$    (IV)

worin $R^3$ eine der Bedeutungen von $R^1$ hat und M Alkalimetallatom bedeutet, umgesetzt wird.

2.  Verfahren nach Anspruch 1, dadurch gekennzeichnet, daß n in Formel (I) gleich 2, 3 oder 4 ist.

3.  Verfahren nach Anspruch 1 oder 2, dadurch gekennzeichnet, daß m in Formel (II) gleich 2 oder 3 ist.

4.  Verfahren nach einem oder mehreren der Ansprüche 1 bis 3, dadurch gekennzeichnet, daß Silan gemäß Formel (II) in Mengen von 0 bis 40 Gewichtsprozent, bezogen auf das Gesamtgewicht an eingesetztem Disilan, eingesetzt wird.

5.  Verfahren nach einem oder mehreren der Ansprüche 1 bis 4, dadurch gekennzeichnet, daß A in Formel (III) Titan, Zirkonium oder Aluminium bedeutet.

6.  Verfahren nach einem oder mehreren der Ansprüche 1 bis 5, dadurch gekennzeichnet, daß Verbindung gemäß Formel (III) in Mengen von 0,2 bis 10 Gewichtsprozent, bezogen auf das Gesamtgewicht an eingesetztem Disilan, eingesetzt wird.

7.  Verfahren nach einem oder mehreren der Ansprüche 1 bis 6, dadurch gekennzeichnet, daß Verbindung gemäß Formel (IV) in Mengen von 0,03 bis 2,50 Gewichtsprozent, bezogen auf das Gesamtgewicht an eingesetztem Disilan, eingesetzt wird.

8.  Verfahren zur Herstellung von SiC-Fasern, dadurch gekennzeichnet, daß ein nach einem oder mehreren der Ansprüche 1 bis 7 hergestelltes Metallopolysilan zu Fasern versponnen und unter inerter Atmosphäre oder im Vakuum bei Temperaturen im Bereich von 800 bis 1400 °C umgesetzt wird.

9.  Verfahren zur Herstellung von poröser SiC-Keramik, dadurch gekennzeichnet, daß ein nach einem oder mehreren der Ansprüche 1 bis 7 hergestelltes Metallopolysilan mit SiC-Pulver vermischt, zu Formkörpern verpreßt und unter inerter Atmosphäre oder im Vakuum bei Temperaturen im Bereich von 700 bis 2200 °C umgesetzt wird.

10. Verfahren zur Herstellung von Schutzüberzügen auf Basis von Siliciumcarbid, dadurch gekennzeichnet, daß ein nach einem oder mehreren der Ansprüche 1 bis 7 hergestelltes Metallopolysilan auf das zu schützende Substrat aufgebracht und unter inerter Atmosphäre bei Temperaturen im Bereich von 700 bis 1500 °C beziehungsweise unter reaktiver Atmosphäre bei Temperaturen von 200 bis 700 °C umgesetzt wird.